# EUROPÄISCHE PATENTSCHRIFT

(11) **EP 1 383 836 B1**
(45) Veröffentlichungstag und Bekanntmachung des Hinweises auf die Patenterteilung: **14.05.2008**
(21) Anmeldenummer: 02732566.1
(22) Anmeldetag: 08.04.2002
(51) Int. Cl.: C08L 69/00

(54) **SCHLAGZÄHMODIFIZIERTE BLENDS AUS POLYETHYLENTEREPHTHALAT UND MINDESTENS EINEM AUF DIHYDROXYDIARYLCYCLOHEXAN BASIERENDEN POLYCARBONAT**
IMPACT RESISTANT MODIFIED BLENDS MADE OF POLYETHYLENTEREPHTHALATE AND AT LEAST ONE POLYCARBONATE BASED ON DIHYDROXYDIARYLCYCLOHEXANE
MELANGES A RESILIENCE MODIFIEE COMPOSES DE POLYETHYLENETEREPHTALATE ET D'AU MOINS UN POLYCARBONATE A BASE DE DIHYDROXYDIARYLCYCLOHEXANE

(30) Priorität: 20.04.2001 DE 10119681
(43) Veröffentlichungstag der Anmeldung: 28.01.2004
(73) Patentinhaber: Bayer MaterialScience AG, 51368 Leverkusen (DE)
(72) Erfinder: BRAIG, Thomas, 40476 Düsseldorf (DE); JOACHIMI, Detlev, 47800 Krefeld (DE); BIENMÜLLER, Matthias, 47803 Krefeld (DE); PAUL, Friedemann, 51469 Bergisch Gladbach (DE)
(86) Internationale Anmeldenummer: PCT/EP2002/003841
(87) Internationale Veröffentlichungsnummer: WO 2002/086839

(56) Entgegenhaltungen:
- EP-A- 0 385 086
- US-A- 5 137 970
- US-A- 5 145 911
- DATABASE WPI Section Ch, Week 199514 Derwent Publications Ltd., London, GB; Class A23, AN 1995-101623 XP002902659 & JP 07 025241 A (MITSUBISHI MOTOR CORP), 27. Januar 1995 (1995-01-27)
- DATABASE WPI Section Ch, Week 200041 Derwent Publications Ltd., London, GB; Class A23, AN 2000-468302 XP002902660 & JP 2000 159993 A (TEIJIN KASEI LTD), 13. Juni 2000 (2000-06-13)

## Beschreibung

Die vorliegende Erfindung betrifft schlagzähmodifizierte Polyethylenterephthalat/Polycarbonat-Blends, die Füllstoffe und/oder Verstärkungsstoffe enthalten, und mindestens eine Polycarbonatkomponente auf der Basis mindestens eines Dihydroxydiarylcycloalkans als Monomeren enthalten. Darüber hinaus betrifft die vorliegende Erfindung die Verwendung der thermoplastischen Formmassen zur Herstellung von Halbzeugen und Formteilen, sowie die aus den thermoplastischen Formmassen erhältlichen Halbzeuge und Formteile.

Anforderungen, die an Karosserieanbauteile aus Kunststoffen gestellt werden, sind gute Zähigkeit bei Schlag- und Zugbelastung, insbesondere auch bei tiefen Temperaturen, ausreichende Steifigkeit, geringe thermische Ausdehnung, gute Fließfähigkeit, gute Oberflächenqualität, gute Lackierbarkeit mit guter Lackhaftung, gute Chemikalien- und Kraftstoffbeständigkeit, und die verwendeten Formmassen müssen zur Herstellung von Karosserieaußenteilen geeignet sein.

Karosserieaußenteile aus Kunststoffen müssen in der Regel lackiert werden. Im Falle wagenfarbig eingefärbter Kunststoffe werden die daraus hergestellten Karosserieanbauteile in der Regel mit einer oder mehreren Schichten durchsichtiger Lacke überzogen. Im Falle nicht wagenfarbig eingefärbter Kunststoffe werden die daraus hergestellten Karosserieanbauteile mit mehreren Lackschichten lackiert, wobei mindestens eine der Schichten farbgebend ist. Die aufgetragenen Lackschichten müssen in der Regel bei erhöhter Temperatur eingebrannt und ausgehärtet werden. Die dafür benötigten Temperaturen und Dauern der Temperaturbelastung unterscheiden sich je nach Lackierverfahren und verwendeten Lacksystem: Für das sogenannte online-Verfahren, in dem die zu lackierenden Teile zusammen mit der Stahlkarosserie die Kathoden-Tauch-Lackierung (KTL) durchlaufen, liegt diese Temperatur derzeit oberhalb von etwa 165°C bis 180°C. Für das sogenannte inline-Verfahren, bei dem die zu lackierenden Teile nach der Kathoden-Tauch-Lackierung der Stahlkarosserie in den Lackierprozess der Karosserie eingeschleust werden, liegt die Temperatur derzeit oberhalb von 130°C bis 160°C. Das Kunststoffmaterial der Karosserieanbauteile darf während dem Aushärt- bzw. Einbrennvorgang möglichst keine Veränderungen, wie z.B. irreversible Verformungen, aufzeigen. Daher ist es erforderlich, thermoplastische Polycarbonatformmassen mit verbesserter Wärmeformbeständigkeit bereitzustellen.

Die Erfahrung aus der Praxis zeigt, dass für Karosserieanbauteile eingesetzte Materialien je nach konkretem Einsatzgebiet große Variationen in den aufgezählten Eigenschaften aufweisen können. Letztendlich entscheidend und sehr wichtig bei allen Materialien ist jedoch eine ausreichende Wärmeformbeständigkeit, um eine problemlose Lackierung zu ermöglichen.

Füllstoffhaltige Polycarbonatformmassen, die teilkristalline Polyester, Pfropfcopolymerisate und mineralische Füllstoffe enthalten, sind bekannt. Derartige Formmassen werden zum Beispiel im Automobilsektor eingesetzt.

In DE-A 19 753 541 werden Polycarbonatformmassen, die teilaromatische Polyester, Pfropfcopolymerisate und mineralische Füllstoffe enthalten, offenbart, die eine für Karosserieaußenteile ausreichende Zähigkeit, aufweisen. Jedoch zeigen die beanspruchten Formmassen unzureichende Wärmeformbeständigkeiten auf.

In EP-A 135 904 werden Polycarbonatformmassen, die Polyethylenterephthalat, Pfropfcopolymerisate auf Polybutadien-Basis und Talk einer Menge bis zu 4 Gew.-% enthalten, beschrieben. Als Vorteil wird eine günstige Eigenschaftskombination aus geringem Verzug ("warpage") und guter Zähigkeit offenbart.

In JP-A 08 176 339 werden Polycarbonatformmassen, die Talk als mineralischen Füllstoff enthalten, beschrieben. ABS-Harze, Polyethylenterephthalat und Polybutylenterephthalat können als weitere Blendpartner eingesetzt werden. Als Vorteil der Formmassen werden gute Schlagzähigkeit und Oberflächenqualität herausgestellt.

In JP-A 07 025 241 werden Polycarbonatformmassen beschrieben, die eine hohe Steifigkeit und gute Oberflächenqualität aufweisen. Die Formmassen enthalten 60 bis 70 Gew.-% Polycarbonat, 20 bis 30 Gew.-% Polyester, 5 bis 10 Gew.-% Acrylatkautschuk und 5 bis 10 Gew.-% Talk sowie 0,1 bis 1 Gew.-Teil (bezogen auf 100 Teile Polymer-Komponenten) Antioxidans.

JP-A 62 138 550 offenbart Polycarbonatformmassen, die Polybutylenterephthalat; Polyester, 5 bis 20 Gew.-% elastische Copolymerisate und 5 bis 40 Gew.-% mineralische Füllstoffe enthalten. JP-A 63 132 961 offenbart vergleichbare Polycarbonatformmassen, die Polybutylenterephthalat, Polyester, 3 bis 20 Gew.-% elastische Copolymerisate und 0,3 bis 40 Gew.-% mineralische Füllstoffe enthalten, für Anwendungen im Automobilbereich.

Die Anmeldung DE-A 199 12 987 offenbart Polycarbonatformmassen, die Polyester, Pfropfcopolymerisate und mineralische Füllstoffe enthalten, die erzielten Wärmeformbeständigkeiten liegen jedoch nicht über 140°C.

US-A 5 376 736 beschreibt Polycarbonatformmassen, die Polyethylenterephthalat und ein Polycarbonat auf Basis von Dihydroxydiphenylcyclohexanen enthalten, für transparente Blends.

EP-A 0 385 086 beschreibt Zusammensetzungen aus Polyalkylenterephthalaten, Polycarbonaten auf Basis von Dihydroxydiphenylcyclohexanen sowie Elastomeren. Die Anmeldung zeigt ebenfalls, dass mit Blends aus Polybutylenterephthalat, Polycarbonat auf Basis von Dihydroxydiphenylcyclohexanen und Elastomeren Vicat B-Wärmeformbeständigkeiten von 157°C nur in Kombination mit extrem schlechtem Zähigkeitsverhalten erreicht werden können, gutes Zähigkeitsverhalten lediglich in Zusammensetzungen mit Vicat B-Wärmeformbeständigkeiten von maximal 142°C erreicht werden können.

Aufgabe der vorliegenden Erfindung war es, Polycarbonatformmassen zur Verfügung zu stellen, die eine ausgezeichnete Wärmeformbeständigkeit und Lackierbarkeit aufweisen, so dass die Formmassen auch für Lackierverfahren mit Temperaturbelastungen von 130°C bis 160°C und höher, wie beispielsweise dem inline-Verfahren, genutzt werden können.

Es wurde nun überraschend gefunden, dass Zusammensetzungen enthaltend Polyethylenterephthalat in Kombination mit mindestens einem Polycarbonat, das auf mindestens einem Dihydroxydiarylcycloalkanderivat basiert, Schlagzähmodifikatoren und Füllstoffen die geforderten Eigenschaften aufweisen. Insbesondere zeigen diese Kombinationen deutlich erhöhte Vicat B-Wärmeformbeständigkeiten verglichen mit Kombinationen aus Polyethylenterephthalaten mit Polycarbonat auf Basis von Bisphenol A, Schlagzähmodifikatoren und Füllstoffen oder verglichen mit Kombinationen aus Polybutylenterephthalat mit Polycarbonat auf Basis von Bisphenol A, Schlagzähmodifikatoren. Die erfindungsgemäßen Zusammensetzungen eignen sich daher beispielsweise besonders für Anwendungen als Karosserieaußenteile, die nach Verfahren lackiert werden, bei denen eine Temperaturbelastung über 130 bis 160°C auftritt, wie beispielsweise dem inline-Lackierverfahren.

Insbesondere wurde gefunden, dass Zusammensetzungen enthaltend Polyethylenterephthalat, Schlagzähmodifikatoren, Füllstoffen in Kombination mit mindestens einem Polycarbonat, das auf mindestens einem Dihydroxydiarylcycloalkanderivat basiert, und mindestens einem weiteren Polycarbonat, das kein Dihydroxydiarylcycloalkanderivat enthält, erhöhte Vicat B-Wärmeformbeständigkeiten und sehr gute Zähigkeiten neben dem eingangs genannten Anforderungsprofil aufweisen, und damit beispielsweise besonders für Anwendungen als Karosserieaußenteile geeignet sind, die nach Verfahren lackiert werden, bei denen eine Temperaturbelastung über 130 bis 160°C auftritt, wie beispielsweise dem inline-Lackierverfahren.

In der vorliegenden Erfindung werden daher Polycarbonatformmassen mit Vicat-B-Wärmeformbeständigkeiten (DIN ISO 306/B 120) oberhalb von 145°C bereitgestellt. Die erfindungsgemäßen Zusammensetzungen weisen zusätzlich einen unerwartet niedrigen Abfall der Schlagzähigkeit bei tiefen Temperaturen auf. Weiterhin sollten die Polycarbonatformmassen ein ausgezeichnetes Gesamteigenschafisprofil für Karosserieanbauteile aus Kunststoffen in Bezug auf die eingangs genannten Anforderungen aufweisen.

Gegenstand der Erfindung sind Zusammensetzungen, enthaltend
A) 4 bis 80, vorzugsweise größer 10 bis 60, besonders bevorzugt 12 bis 40, insbesondere 19 bis 29 Gew.-Teile, mindestens eines Polyethylenterephthalates,
B) 0 bis 50, bevorzugt 3 bis 50, bevorzugter 4 bis 43, besonders bevorzugt 4 bis 32, am meisten bevorzugt 5 bis 27 Gew.-Teile, mindestens eines aromatischen Polycarbonats, das nicht auf Dihydroxydiarylcycloalkanen basiert,
C) 10 bis 90, vorzugsweise 15 bis 80, besonders bevorzugt 20 bis 60, insbesondere 23 bis 55 Gew.-Teile mindestens eines von Komponente B) verschiedenen Polycarobonats, dessen Basis mindestens ein Dihydroxydiarylcycloalkanderivat umfasst,
D) 1,5 bis 35, vorzugsweise 3 bis 25, besonders bevorzugt 6 bis 20, insbesondere 8 bis 17 Gew.-Teile, mindestens eines Pfropfpolymerisats auf Basis eines MBS-(Methylmethacrylat-Butadien-Styrol)-Kautschuks,
E) 1,5 bis 54, vorzugsweise 2,5 bis 34, besonders bevorzugt 3,5 bis 28, insbesondere 5 bis 21 Gew.-Teile, mindestens eines Füllstoffes und/oder Verstärkungsstoffes.

Darüber hinaus können die erfindungsgemäßen Zusammensetzungen noch weitere Zusatzstoffe wie Nukleierungsmittel, Stabilisatoren, Gleit- und/oder Entformungsmittel, Leitfahigkeitsadditive, Brandschutzmittel, Pigmente und/oder Farbstoffe etc. enthalten.

Bevorzugt ist hierbei, dass die Summe der Gewichtsteile von A - E und der genannten weiteren Zusatzstoffe 100 ergibt.

Als **Komponente A** enthalten die Zusammensetzungen erfindungsgemäß ein Polyethylenterephthalat oder eine Mischung aus zwei oder mehr unterschiedlichen Polyethylenterephthalaten. Polyethylenterephthalate im Sinne der Erfindung sind Polyalkylenterephthalate, die sich von Terephthalsäure (oder ihren reaktionsfähigen Derivaten) und Alkandiolen auf Basis von Ethylenglykol ableiten.

Bevorzugte Polyethylenterephthalate (im folgenden auch abgekürzt: PET) lassen sich aus Terephthalsäure (oder ihren reaktionsfähigen Derivaten) und aliphatischen oder cycloaliphatischen Diolen mit Ethylenglycoleinheit nach bekannten Methoden herstellen (Kunststoff-Handbuch, Bd. VIII, S. 695 FF, Karl-Hanser-Verlag, München 1973).

Bevorzugte Polyethylenterephthalate enthalten mindestens 80, vorzugsweise 90 mol-%, bezogen auf die Dicarbonsäure, Terephthalsäurereste und mindestens 80, vorzugsweise mindestens 90 mol-%, bezogen auf die Diolkomponente, Ethylenglykolreste.

Die bevorzugten Polyethylenterephthalate können neben Terephthalsäureresten bis zu 20 mol-% Reste anderer aromatischer Dicarbonsäuren mit 8 bis 14 C-Atomen oder aliphatischer Dicarbonsäuren mit 4 bis 12 C-Atomen enthalten, vorzugsweise Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyethylenterephthalate können neben Ethylenglykol bis zu 20 mol-% anderer aliphatischer Diole mit 3 bis 12 C-Atomen oder cycloaliphatischer Diole mit 6 bis 21 C-Atomen enthalten, z.B. Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und-1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-A 24 07 674, 24 07 776, 27 15 932). Polyethylenterephthalate können weiterhin auch bis zu 20 mol-% Ether- bzw. Polyetherstrukturen enthalten.

Die Polyethylenterephthalate können durch Einbau relativ kleiner Mengen 3- oder 4-wertiger Alkohole oder 3- oder 4-basischer Carbonsäure, wie sie z.B. in der DE-A 19 00 270 und der US-A 3 692 744 beschrieben sind, verzweigt werden. Beispiele bevorzugter Verzweigungsmittel sind Trimesinsäure, Trimellitsäure, Trimethylolethan und -propan und Pentaerythrit. Es ist ratsam, nicht mehr als 1 mol-% des Verzweigungsmittels, bezogen auf die Säurekomponente, zu verwenden.

Bevorzugte Polyethylenterephthalate sind auch Copolyester, die aus mindestens zwei Säurekomponenten und/oder aus mindestens zwei Alkoholkomponenten hergestellt sind, besonders bevorzugte Copolyester sind Poly-(ethylenglykol/butandiol-1,4)-terephthalate.

Besonders bevorzugt sind Polyethylenterephthalate, die allein aus Terephthalsäure und deren reaktionsfähigen Derivaten (z.B. deren Dialkylestem) und Ethylenglykol hergestellt worden sind.

Die Polyethylenterephthalate besitzen im allgemeinen eine Intrinsic-Viskosität von ca. 0,3 bis 1,5 dl/g, bevorzugt 0,4 bis 1,3 dl/g, insbesondere bevorzugt 0,5 bis 0,8 dl/g, jeweils gemessen in Phenol/o-Dichlorbenzol (1:1 Gew.-Teile) bei 25°C.

Besonders bevorzugt sind schnell kristallisierende Polyethylenterephthalate, dass heißt Polyethylenterephthalate, die nach der DSC-Methode für isotherme Kristallisation bei 215°C Kristallisationszeiten im allgemeinen kleiner 15 Minuten, bevorzugt von kleiner 10 Minuten und besonders bevorzugt von kleiner 5 Minuten aufweisen.

Eine schnelle Kristallisation der erfindungsgemäßen Polyethylenterephthalate wird bevorzugt durch Zusatz von Kristallisationsmitteln zum Polyethylenterephthalat bei dessen Herstellung oder im Anschluss z.B. durch Einmischen in die Polyethylenterephthalat-Schmelze erreicht. Als Kristallisationsmittel werden bevorzugt Metallsalze organischer Carbonsäuren verwendet, wie z.B. Alkali- oder Erdalkalimetallsalze der Benzoesäure oder substituierten Benzoesäure.

Ein Teil des Polyethylenterephthalates kann durch andere thermoplastische Polyester, bevorzugt Polybutylenterephthalat ersetzt werden. Im allgemeinen können bis zu 50 Gew.-%, vorzugsweise bis zu 10, bezogen auf Polyethylenterephthalat) Polyethylenterephthalat durch andere thermoplastische Polyester, bevorzugt Polyalkylenterephthalate, ersetzt werden.

Thermoplastische Polyester sind Reaktionsprodukte aus aromatischen Dicarbonsäure oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte weitere thermoplastische Polyester stellen Polyalkylenterephthalate dar, die sich aus Terephthalsäure (oder ihren reaktionsfähigen Derivaten) und aliphatischen oder cycloaliphatischen Diolen mit 3 bis 10 C-Atomen nach bekannten Methoden herstellen lassen (Kunststoff-Handbuch, Bd. VIII, S. 695 FF, Karl-Hanser-Verlag, München 1973).

Bevorzugte Polyalkylenterephthalate enthalten mindestens 80, vorzugsweise 90 mol-%, bezogen auf die Dicarbonsäure, Terephthalsäurereste und mindestens 80, vorzugsweise mindestens 90 mol-%, bezogen auf die Diolkomponente, Butandiol-1,4-Reste.

Die bevorzugten Polyalkylenterephthalate können neben Terephthalsäureresten bis zu 20 mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Butandiol-1,4-glykolresten bis zu 20 mol-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-β-hydroxyethoxyphenyl)-propan und 2,2-bis-(4-hydroxypropoxyphenyl)-propan (DE-A 24 07 674, 24 07 776, 27 15 932).

Die Polyalkylenterephthalate können - wie oben bereits beschrieben ist - ebenfalls durch Einbau relativ kleiner Mengen 3- oder 4-wertiger Alkohole oder 3- oder 4-basischer Carbonsäure, verzweigt werden.

Besonders bevorzugt sind Polyalkylenterephthalate, die allein aus Terephthalsäure und deren reaktionsfähigen Derivaten (z.B. deren Dialkylestern) und Butandiol-1,4 hergestellt worden sind (Polybutylentherephthalat).

Bevorzugte Polyalkylenterephthalate sind auch Copolyester, die aus mindestens zwei der oben genannten Säurekomponenten und/oder aus mindestens zwei der oben genannten Alkoholkomponenten hergestellt sind.

Die Polyalkylenterephthalate besitzen im allgemeinen eine Intrisic-Viskosität von ca. 0,3 bis 1,5 dl/g, vorzugsweise 0,4 bis 1,3 dl/g, jeweils gemessen in Phenol/o-Dichlorbenzol (1:1 Gew.-Teile) bei 25°C.

Als Komponente B enthalten die erfindungsgemäßen Zusammensetzungen erfindungsgemäß ein Polycarbonat oder eine Mischung von Polycarbonaten.

Bevorzugte Polycarbonate sind solche Homopolycarbonate und Copolycarbonate auf Basis der Bisphenole der allgemeinen Formel (I),

HO-Z-OH (I)

worin Z ein divalenter organischen Rest mit 6 bis 30 C-Atomen ist, der eine oder mehrere aromatische Gruppen enthält.

Bevorzugt sind Bisphenole der Formel (Ia) 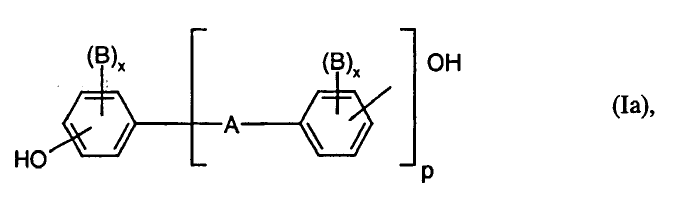 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können, oder ein Rest der Formel (II) oder (III) 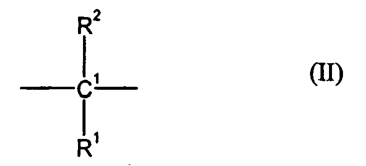 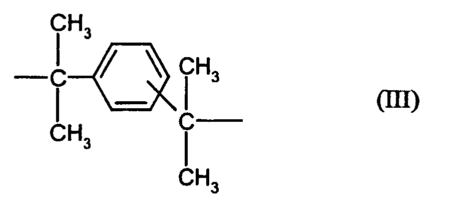
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R¹ und R²: für jedes C¹ individuell wählbar, unabhängig voneinander Wasserstoff oder C₁-C₆-Alkyl, vorzugsweise Wasserstoff, Methyl oder Ethyl sind.

Polycarbonate auf Basis von Dihydroxydiarylcycloalkanen (Komponente C) sind für Komponente B ausgenommen.

Beispiele für Bisphenole gemäß der allgemeinen Formel (I) sind Bisphenole, die zu den folgenden Gruppen gehören: Dihydroxydiphenyle, Bis-(hydroxyphenyl)-alkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und α,α'-Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind Beispiele für Bisphenole gemäß der allgemeinen Formel (I).

Beispiele für Bisphenole gemäß der allgemeinen Formel (I) sind insbesondere die folgenden Verbindungen: Hydrochinon, Resorcin, 4,4'-Dihydroxydiphenyl, Bis-(4 hydroxyphenyl)sulfid, Bis-(4-hydroxyphenyl)sulfon, Bis-(3,5-dimethyl-4-hydroxyphenyl)-methan, Bis-(3,5-dimethyl-4-hydroxyphenyl)-sulfon, 1,1-Bis-(3,5-dimethyl-4-hydroxyphenyl)-p/m-diisopropylbenzol, 1 1-Bis-(4-hydroxyphenyl)-1-phenylethan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α'-Bis-(4-hydroxyphenyl)-o-diisopropylbenzol, α,α'-Bis-(4-hydroxyphenyl)-m-diisopropylbenzol (d. h. Bisphenol M), α,α'-Bis-(4-hydroxyphenyl)-p-diisopropylbenzol und Indanbisphenol.

Besonders bevorzugte Polycarbonate B) sind das Homopolycarbonat auf Basis von Bisphenol A.

Die beschriebenen Bisphenole gemäß der allgemeinen Formel (I) können nach bekannten Verfahren, z.B. aus den entsprechenden Phenolen und Ketonen, hergestellt werden.

Die genannten Bisphenole und Verfahren zu ihrer Herstellung sind zum Beispiel beschrieben in der Monographie H. Schnell, "Chemistry and Physics of Polycarbonates", Polymer Reviews, Band 9, S. 77-98, Interscience Publishers, New York, London, Sidney, 1964 und in US-A 3 028 635, in US-A 3 062 781, in US-A 2 999 835, in US-A 3 148 172, in US-A 2 991 273, in US-A 3 271 367, in US-A 4 982 014, in US-A 2 999 846, in DE-A 1 570 703, in DE-A 2 063 050, in DE-A 2 036 052, in DE-A 2211 956, in DE-A 3 832 396, und in FR-A 1 561 518 sowie in den Japanischen Offenlegungsschriften mit den Anmeldenummern 62039/1986, 62040/1986 und 105550/1986.

1,1-Bis-(4-hydroxyphenyl)-3,3,5-trimethylcyclohexan und seine Herstellung ist z.B. beschrieben in US-A 4 982 014.

Indanbisphenole und ihre Herstellung sind zum Beispiel beschrieben in US-A 3 288 864, in JP-A 60 035 150 und in US-A 4 334 106. Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299 und in D.C. Prevorsek, B.T. Debona und Y. Kesten, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980).

Das Schmelzeumesterungsverfahren ist insbesondere beschrieben in H. Schnell, "Chemistry and Physics of Polycarbonates", Polymer Reviews, Band 9, S. 44 bis 51, Interscience Publishers, New York, London, Sidney, 1964 sowie in DE-A 1 031 512, in US-A 3 022 272, in US-A 5 340 905 und in US-A 5 399 659.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Die erfindungsgemäß geeigneten Polycarbonate haben bevorzugt ein Gewichtsmittel der molaren Masse (M̅_{w}), welches sich z.B. durch Ultrazentrifugation oder Streulichtmessung bestimmen lässt, von 10 000 bis 200 000 g/mol. Besonders bevorzugt haben sie ein Gewichtsmittel der molaren Masse von 12 000 bis 80 000 g/mol, insbesondere bevorzugt 20 000 bis 35 000 g/mol.

Die mittlere molare Masse der erfindungsgemäßen Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z.B. Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge an Kettenabbrechern beträgt bevorzugt zwischen 0,25 und 10 mol-%, bezogen auf die Summe der jeweils eingesetzten Bisphenole.

Die erfindungsgemäß geeigneten Polycarbonate können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und α,α',α''-Tris-(4-hydroxyphenol)-1,3,5-triisopropylbenzol.

Bevorzugte Verzweiger sind 1,1,1-Tris-(4-hydroxyphenyl)-ethan und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 mol-% bis 2 mol-%, bezogen auf Mole an eingesetzten Bisphenolen.

Die Verzweiger können zum Beispiel im Falle der Herstellung des Polycarbonates nach dem Phasengrenzflächenverfahren mit den Bisphenolen und den Kettenabbrechern in der wässrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von Polycarbonat nach dem Schmelzeumesterungsverfahren sind die literaturbekannten Ammoniumsalze und Phosphoniumsalze (siehe beispielsweise US-A 3 442 864, JP-A-14742/72, US-A 5 399 659 und DE-A 19 539 290).

Copolycarbonate können auch verwendet werden. Copolycarbonate im Sinne der Erfindung sind insbesondere Polydiorganosiloxan-Polycarbonat-Blockcopolymere, deren Gewichtsmittel der molaren Masse (M̅_{w}) bevorzugt 10 000 bis 200 000 g/mol, besonders bevorzugt 20 000 bis 80 000 g/mol beträgt (ermittelt durch Gelchromatographie nach vorheriger Eichung durch Lichtstreuungsmessung oder Ultrazentrifugation). Der Gehalt an aromatischen Carbonatstruktureinheiten in den Polydiorganosiloxan-Polycarbonat-Blockcopolymeren beträgt vorzugsweise 75 bis 97,5 Gew.-%, besonders bevorzugt 85 bis 97 Gew.-%. Der Gehalt an Polydiorganosiloxanstruktureinheiten in den Polydiorganosiloxan-Polycarbonat-Blockcopolymeren beträgt vorzugsweise 25 bis 2,5 Gew.-%, besonders bevorzugt 15 bis 3 Gew.-%. Die Polydiorganosiloxan-Polycarbonat-Blockcopolymeren können zum Beispiel ausgehend von α,ω-Bishydroxyaryloxyendgruppen-haltigen Polydiorganosiloxanen mit einem mittleren Polymerisationsgrad von bevorzugt Pₙ = 5 bis 100, besonders bevorzugt Pₙ = 20 bis 80, hergestellt werden.

Die Polydiorganosiloxan-Polycarbonat-Blockpolymere können auch eine Mischung aus Polydiorganosiloxan-Polycarbonat-Blockcopolymeren mit üblichen polysiloxanfreien, thermoplastischen Polycarbonaten sein, wobei der Gesamtgehalt an Polydiorganosiloxanstruktureinheiten in dieser Mischung bevorzugt 2,5 bis 25 Gew.-% beträgt.

Solche Polydiorganosiloxan-Polycarbonat-Blockcopolymere sind dadurch gekennzeichnet, dass sie in der Polymerkette einerseits aromatische Carbonatstruktur-Einheiten (1) und andererseits Aryloxyendgruppen-haltige Polydiorganosiloxane (2) enthalten, 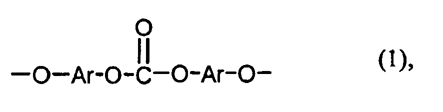 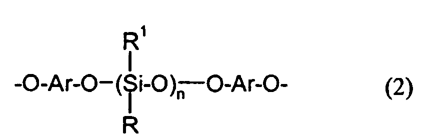 worin
- Ar: gleiche oder verschiedene difunktionelle aromatische Reste sind und
- R und R¹: gleich oder verschieden sind und lineares Alkyl, verzweigtes Alkyl, Alkenyl, halogeniertes lineares Alkyl, halogeniertes verzweigtes Alkyl, Aryl oder halogeniertes Aryl, vorzugsweise Methyl, bedeuten und
- n: den mittleren Polymerisationsgrad von bevorzugt 5 bis 100, besonders bevorzugt 20 bis 80, bedeutet.

Alkyl ist in vorstehender Formel (2) vorzugsweise C₁-C₂₀-Alkyl, Alkenyl ist in vorstehender Formel (2) vorzugsweise C₂-C₆-Alkenyl; Aryl ist in vorstehender Formel (2) vorzugsweise C₆-C₁₄-Aryl. Halogeniert bedeutet in vorstehender Formel teilweise oder vollständig chloriert, bromiert oder fluoriert.

Beispiele für Alkyle, Alkenyle, Aryle, halognierte Alkyle und halogenierte Aryle sind Methyl, Ethyl, Propyl, n-Butyl, tert.-Butyl, Vinyl, Phenyl, Naphthyl, Chlormethyl, Perfluorbutyl, Perfluoroctyl und Chlorphenyl.

Derartige Polydiorganosiloxan-Polycarbonat-Blockcopolymere und ihre Herstellung werden zum Beispiel in US-A 3 189 662, US-A 3 821 325 und US-A 3 832 419 beschrieben.

Bevorzugte Polydiorganosiloxan-Polycarbonat-Blockcopolymere können z.B. hergestellt werden, indem man α,ω-Bishydroxyaryloxyendgruppen-haltige Polydiorganosiloxane zusammen mit anderen Bisphenolen, gegebenenfalls unter Mitverwendung von Verzweigern in den üblichen Mengen, z.B. nach dem Zweiphasengrenzflächenverfahren umsetzt (wie zum Beispiel beschrieben in H. Schnell, "Chemistry and Physis of Polycarbonates", Polymer Reviews, Band 9, S. 31-76, Interscience Publishers, New York, London, Sidney, 1964). Die als Edukte für diese Synthese verwendeten α,ω-Bishydroxyaryloxyendgruppen-haltige Polydiorganosiloxane und ihre Herstellung sind zum Beispiel in US-A 3 419 634 beschrieben.

Den Polycarbonaten könne übliche Additive wie z.B. Entformungsmittel in der Schmelze zugemischt oder auf der Oberfläche aufgebracht werden. Bevorzugt enthalten die verwendeten Polycarbonate bereits Entformungsmittel vor Compoundierung mit den anderen Komponenten der erfindungsgemäßen Formmassen.

Als Komponente C enthalten die erfindungsgemäßen Zusammensetzungen erfindungsgemäß ein Polycarbonat oder eine Mischung von Polycarbonaten.

Bevorzugte Polycarbonate sind solche Homopolycarbonate und Copolycarbonate entsprechend der Komponente B auf Basis der Bisphenole der allgemeinen Formel (I),

HO-Z-OH (I)

worin Z ein divalenter organischen Rest mit 6 bis 30 C-Atomen ist, der eine oder mehrere aromatische Gruppen enthält.

Komponente C) unterscheidet sich von Komponente B) erfindungsgemäß dadurch, dass die Basis des Polycarbonats Komponente C) mindestens einmal ein Dihydroxydiarylcycloalkan (IV) 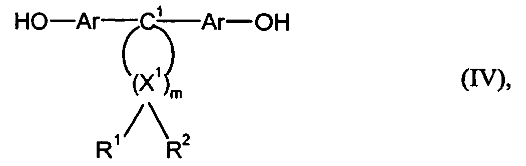 bevorzugt ein Dihydroxydiphenylcycloalkan (IVa) 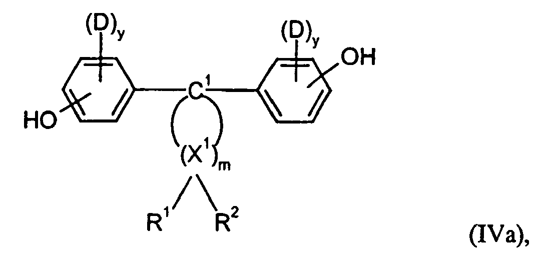 besonders bevorzugt ein Di(*para*-hydroxyphenyl)cycloalkan (IVb) 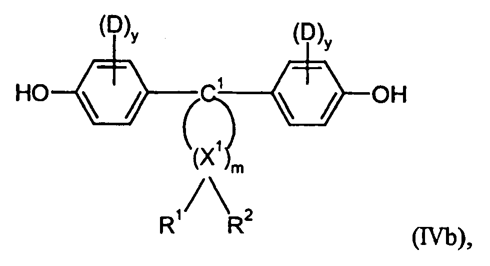 umfasst, wobei
- Ar: beliebig substituierte oder unsubstituierte aromatische Einheiten oder Arylene sind, bevorzugt Phenylene oder Naphthylene, besonders bevorzugt Phenylene, am meisten bevorzugt *para*-Phenylene,
- R¹ und R²: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff,
- D: jeweils C₁-C₁₂-Alkyl, vorzugsweise Methyl, Halogen, vorzugsweise Chlor und/oder Brom
- y: jeweils unabhängig voneinander 0, 1, 2, 3 oder 4, bevorzugt 0,1 oder 2, besonders bevorzugt 0,
- m: eine ganze Zahl von 4 bis 7, bevorzugt 4 oder 5 bedeuten, mit der Maßgabe, dass an mindestens einen Atom X¹, R¹ und R² gleichzeitig Alkyl sind.

Erfindungsgemäß können als Basis für das Polycarbonat der Komponente C) bevorzugt auch Mischungen aus einem oder mehreren der eben beschriebenen Dihydroxydiarylcycloalkane (allgemeine Formel (IV)) mit einem oder mehreren Bisphenolen der allgemeinen Formel (I) wie für Komponente B) beschrieben dienen, so dass daraus erfindungsgemäß Copolycarbonate resultieren, die mindestens eine Diarylencycloalkaneinheit umfassen. Erfindungsgemäß können Polycarbonate der Komponente C) auch Blockcopolycarbonate aus Polycarbonatblöcken, die auf Dihydroxydiarylcycloalkanen (allgemeine Formel (IV)) oder auf Copolycarbonaten mit einer Dihydroxydiarylcycloalkane umfassenden Basis basieren, und Polycarbonatblöcken auf der Basis von Bisphenolen der allgemeinen Formel (I).

Insbesondere bevorzugt ist ein Polycarbonat als Komponente C), das auf mindestens einem Dihydroxydiphenylcycloalkan mit 5 oder 6 Ring-C-Atomen im cycloaliphatische Rest (m = 4 oder 5 in Formel (IVb)) basiert, wie beispielsweise die Diphenole der Formeln 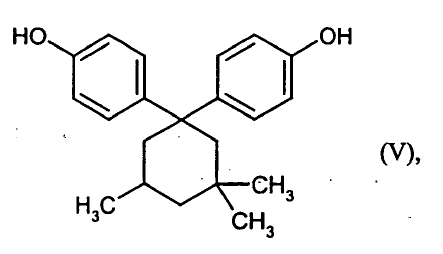 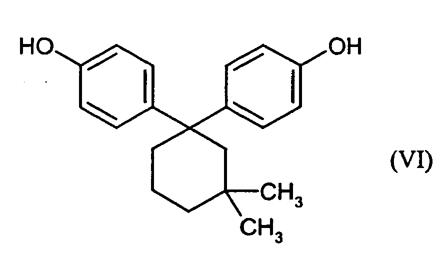 und 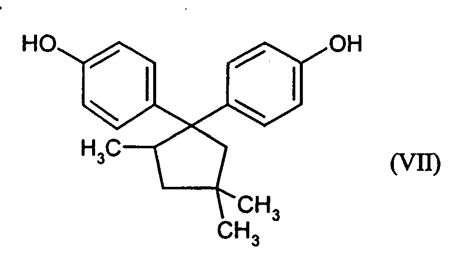 wobei das 1,1-Bis-(4-hydroxyphenyl)-3,3,5-trimethylcyclohexan (Formel V) besonders bevorzugt ist.

Besonders bevorzugte Polycarbonate als Komponente C) sind das Homopolycarbonat auf Basis von 1,1-Bis-(4-hydroxyphenyl)-3,3,5-trimethylcyclohexan (Formel V). Am meisten bevorzugt sind die Copolycarbonate auf Basis von Bisphenol A und 1,1-Bis-(4-hydroxyphenyl)-3,3,5-trimethylcyclohexan. (Formel V)

Die Polycarbonate der Komponente C) weisen bevorzugt eine Vicat B-Wärmeformbeständigkeit von 150 bis 260°C, besonders bevorzugt 155 bis 245°C, äußerst bevorzugt von 167 bis 230°C und am meisten bevorzugt von 181 bis 206°C auf.

Die erfindungsgemäße Komponente C) und deren Darstellung, sowie die Darstellung der Dihydroxydiarylcycloalkane, beispielsweise aus den entsprechenden Phenolen und Ketonen, wird beispielsweise ausführlich in EP-A 0 359 953 und EP-A 0 4698 404 beschrieben. 1,1-Bis-(4-hydroxyphenyl)-3,3,5-trimethylcyclohexan (Formel V) und seine Herstellung ist z.B. beschrieben in US-A 4 982 014 oder EP-A 0 359 953.

Die Herstellung der als Comonomere beschriebenen Bisphenole gemäß der allgemeinen Formel (I) erfolgte bereits bei Beschreibung der Komponente B).

Polycarbonate der Komponente C) können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299 und in D.C. Prevorsek, B.T. Debona und Y. Kesten, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980).

Das Schmelzeumesterungsverfahren ist insbesondere beschrieben in H. Schnell, "Chemistry and Physics of Polycarbonates", Polymer Reviews, Band 9, S. 44 bis 51, Interscience Publishers, New York, London, Sidney, 1964 sowie in DE-A 1031 512, in US-A 3 022 272, in US-A 5 340 905 und in US-A 5 399 659.

Bei der Herstellung von Polycarbonat der Komponente C) werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Die erfindungsgemäß geeigneten Polycarbonate der Komponenten C) haben bevorzugt ein Gewichtsmittel der molaren Masse (M̅_{w}), welches sich z.B. durch Ultrazentrifugation, Streulichtmessung oder Gelpermeationschromatographie nach vorheriger Kalibrierung bestimmen lässt, von über 10 000, bevorzugt von 10 000 bis 300 000 g/mol. Besonders bevorzugt haben sie ein Gewichtsmittel der molaren Masse von 12 000 bis 80 000 g/mol, insbesondere bevorzugt 20 000 bis 38 000 g/mol.

Die mittlere molare Masse der erfindungsgemäßen Polycarbonate der Komponente C) kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z.B. Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge an Kettenabbrechern beträgt bevorzugt zwischen 0,25 und 10 mol-%, bezogen auf die Summe der jeweils eingesetzten Bisphenole.

Die erfindungsgemäß geeigneten Polycarbonate der Komponenten C) können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"-dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und α,α',α''-Tris-(4-hydroxyphenol)-1,3,5-triisopropylbenzol.

Bevorzugte Verzweiger sind 1,1,1-Tris-(4-hydroxyphenyl)-ethan und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 mol-% bis 2 mol-%, bezogen auf Mole an eingesetzten Bisphenolen.

Die Verzweiger können zum Beispiel im Falle der Herstellung des Polycarbonates der Komponente C) nach dem Phasengrenzflächenverfahren mit den Bisphenolen und den Kettenabbrechern in der wässrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von Polycarbonat nach dem Schmelzeumesterungsverfahren sind die literaturbekannten Ammoniumsalze und Phosphoniumsalze (siehe beispielsweise US-A 3 442 864, JP-A-14742/72, US-A 5 399 659 und DE-A 19 539 290).

Copolycarbonate können auch verwendet werden. Copolycarbonate im Sinne der Erfindung für die Komponente C) sind insbesondere Polydiorganosiloxan-Polycarbonat-Blockcopolymere, deren Gewichtsmittel der molaren Masse (M̅_{w}) bevorzugt 10 000 bis 200 000 g/mol, besonders bevorzugt 20 000 bis 80 000 g/mol beträgt (ermittelt durch Gelchromatographie nach vorheriger Eichung durch Lichtstreuungsmessung oder Ultrazentrifugation). Der Gehalt an aromatischen Carbonatstruktureinheiten in den Polydiorganosiloxan-Polycarbonat-Blockcopolymeren beträgt vorzugsweise 75 bis 97,5 Gew.-%, besonders bevorzugt 85 bis 97 Gew.-%. Der Gehalt an Polydiorganosiloxanstruktureinheiten in den Polydiorganosiloxan-Polycarbonat-Blockcopolymeren beträgt vorzugsweise 25 bis 2,5 Gew.-%, besonders bevorzugt 15 bis 3 Gew.-%. Die Polydiorganosiloxan-Polycarbonat-Blockcopolymeren können zum Beispiel ausgehend von α,ω-Bishydroxyaryloxyendgruppen-haltigen Polydiorganosiloxanen mit einem mittleren Polymerisationsgrad von bevorzugt Pₙ = 5 bis 100, besonders bevorzugt Pₙ = 20 bis 80, hergestellt werden.

Die Polydiorganosiloxan-Polycarbonat-Blockpolymere können auch eine Mischung aus Polydiorganosiloxan-Polycarbonat-Blockcopolymeren mit üblichen polysiloxanfreien, thermoplastischen Polycarbonaten sein, wobei der Gesamtgehalt an Polydiorganosiloxanstruktureinheiten in dieser Mischung bevorzugt 2,5 bis 25 Gew.-% beträgt.

Solche Polydiorganosiloxan-Polycarbonat-Blockcopolymere sind dadurch gekennzeichnet, dass sie in der Polymerkette einerseits aromatische Carbonatstruktur-Einheiten (1) und andererseits Aryloxyendgruppen-haltige Polydiorganosiloxane (2) enthalten, 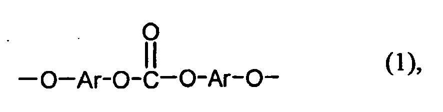 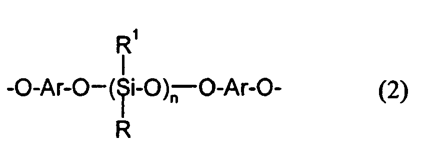 worin
- Ar: gleiche oder verschiedene difunktionelle aromatische Reste sind und
- R und R¹: gleich oder verschieden sind und lineares Alkyl, verzweigtes Alkyl, Alkenyl, halogeniertes lineares Alkyl, halogeniertes verzweigtes Alkyl, Aryl oder halogeniertes Aryl, vorzugsweise Methyl, bedeuten und
- n: den mittleren Polymerisationsgrad von bevorzugt 5 bis 100, besonders bevorzugt 20 bis 80, bedeutet.

Alkyl ist in vorstehender Formel (2) vorzugsweise C₁-C₂₀-Alkyl, Alkenyl ist in vorstehender Formel (2) vorzugsweise C₂-C₆-Alkenyl; Aryl ist in vorstehender Formel (2) vorzugsweise C₆-C₁₄-Aryl. Halogeniert bedeutet in vorstehender Formel teilweise oder vollständig chloriert, bromiert oder fluoriert.

Beispiele für Alkyle, Alkenyle, Aryle, halognierte Alkyle und halogenierte Aryle sind Methyl, Ethyl, Propyl, n-Butyl, tert.-Butyl, Vinyl, Phenyl, Naphthyl, Chlormethyl, Perfluorbutyl, Perfluoroctyl und Chlorphenyl.

Derartige Polydiorganosiloxan-Polycarbonat-Blockcopolymere und ihre Herstellung werden zum Beispiel in US-A 3 189 662, US-A 3 821 325 und US-A 3 832 419 beschrieben.

Bevorzugte Polydiorganosiloxan-Polycarbonat-Blockcopolymere können z.B. hergestellt werden, indem man α,ω-Bishydroxyaryloxyendgruppen-haltige Polydiorganosiloxane zusammen mit anderen Bisphenolen, gegebenenfalls unter Mitverwendung von Verzweigern in den üblichen Mengen, z.B. nach dem Zweiphasengrenzflächenverfahren umsetzt (wie zum Beispiel beschrieben in H. Schnell, "Chemistry and Physis of Polycarbonates", Polymer Reviews, Band 9, S. 31-76, Interscience Publishers, New York, London, Sidney, 1964). Die als Edukte für diese Synthese verwendeten α,ω-Bishydroxyaryloxyendgruppen-haltige Polydiorganosiloxane und ihre Herstellung sind zum Beispiel in US-A 3 419 634 beschrieben.

Den Polycarbonaten der Komponente C) könne übliche Additive wie z.B. Entformungsmittel in der Schmelze zugemischt oder auf der Oberfläche aufgebracht werden. Bevorzugt enthalten die verwendeten Polycarbonate bereits Entformungsmittel vor Compoundierung mit den anderen Komponenten der erfindungsgemäßen Formmassen.

Als **Komponente D)** enthalten die Zusammensetzungen erfindungsgemäß

Pfropfcopolymere, bei denen Methylmethacrylat oder eine Mischung von Methylmethacrylat und Styrol auf eine Pfropfgrundlage auf 1,3-Butadienbasis oder auf eine Pfropfgrundlage aus einer Mischung aus 1,3-Butadien und Styrol aufgepfopft werden, die auch als MBS-(Methylmethacrylat-Butadien-Styrol)-Kautschuke bezeichnet werden.

Ausdrücklich können die Monomermischungen, die auf die Pfropfgrundlage aufgepfropft werden, auch mit zusätzlichen reaktiven Gruppen, wie beispielsweise Epoxy- bzw. Glycidyl-, Carboxyl-, Carbonsäureanhydrid-, Amino- und/oder Amid-Gruppen, funktionalisierte Monomere mit eine ethylenischen Doppelbindung umfassen, wie beispielsweise Acylamid, Methacrylamid, (N,N-Dimehtylamino)ethylacrylat, bevorzugt Maleinsäure, Fumarsäure, Maleinsäureanhydrid, Allylglycidylether, Vinylglycidylether, Glycidylacrylat, Glycidylmetacrylat.

Erfindungsgemäß können auch vernetztende Monomere in die Pfropfgrundlage und/oder in äußere Schalen einpolymerisiert werden, wie beispielsweise Divinylbenzol, Diallylphthalat, Dihydrodicyclopentadienacrylat und/oder 1,3-Butadien.

Ferner können auch sogenannte pfropfvernetzende Monomere eingesetzt werden, die mindestens zwei polymerisierbare Doppelbindungen besitzten, wobei die Doppelbindungen bei der Polymerisation mit verschiedenen Geschwindigkeiten polymerisieren. Vorzugsweise polymerisiert eine Doppelbindung mit etwa der Geschwindigkeit wie die übrigen Monomere, die andere bzw. anderen Doppelbindung dagegen deutlich langsamer, so dass daraus ein gewisser Anteil an Doppelbindungen im Kautschuk resultiert. Beim Aufpfropfen einer weiteren Phase können Teile dieser Doppelbindungen mit den Pfropfmonomeren reagieren und die aufgepfropfte Phase somit partiell chemisch an die Propfgrundlage binden. Beispielsweise seien hier ethylenisch ungesättigte Carbonsäureester wie Allylacrylat, Allylmethacrylat, Diallymaleat, Diallylfumarat oder in US-PS 4 148 846 genannte Verbindungen genannt.

Bevorzugte Polymerisate D) sind partiell vernetzt und besitzen Gelgehalte von über 5 Gew.-%, bevorzugt 20 Gew.-%, vorzugsweise über 40 Gew.-%, insbesondere über 60 Gew.-%.

Die Komponente D) kann auch eine Mischung verschiedener Pfropfcopolymerisate sein.

Der Gelanteil der Pfropfgrundlage β beträgt im allgemeinen mindestens 20 Gew.-%, vorzugsweise 40 Gew.-% (in Toluol gemessen) und der Pfropfgrad G im allgemeinen 0,15 bis 0,55.

Der mittlere Teilchendurchmesser des Pfropfcopolymerisats der Komponente D) beträgt bevorzugt 0,01 bis 2 µm, bevorzugter 0,05 bis 1,0, besonders bevorzugt 0,1 bis 0,08, insbesondere 0,1 bis 0,4 µm.

Der mittlere Teilchendurchmesser wird beispielsweise an elektronenmikroskopischen Aufnahmen (TEM) von Ultra-Dünnschnitten der erfindungsgemäßen Formmassen, mit OsO₄ und RuO₄ behandelt, durch Ausmessen einer repräsentativen Menge (ca. 50) von Partikeln bestimmt.

Die mittlere Teilchengröße d₅₀ bestimmt mittels Ultrazentrifugation (W. Scholtan, H. Lange, Kolloid, Z. und Z. Polymere 250 (1972), 782-796) ist der Durchmesser oberhalb und unterhalb dessen jeweils 50 Gew.-% der Teilchen liegen. Die mittlere Teilchengröße d₅₀ der Pfropfpolymerisate D) beträgt bevorzugt 0,1 bis 0,6 µm.

Der Gelgehalt der Pfropfgrundlage D.2 wird bei 25°C in Dimethylformamid bestimmt (M. Hoffmann, H. Krömer, R. Kuhn, Polymeranalytik I und II, Georg Thieme-Verlag, Stuttgart 1977).

Der Pfropfgrad G bezeichnet das Gewichtsverhältnis von aufgepfropften Pfropfmonomeren zur Pfropfgrundlage und ist dimensionslos.

Die Pfropfpolymerisate D) können nach bekannten Verfahren wie Masse-, Suspensions-, Emulsions- oder Masse-Suspensionsverfahren hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten D) auch solche Produkte verstanden, die durch Polymerisation der Pfropfmonomere in Gegenwart der Pfropfgrundlage gewonnen werden.

Die Pfropfpolymerisate D) werden bevorzugt in kompaktierter Form eingesetzt.

Als **Komponente E)** enthalten die thermoplastischen Formmassen ein Füllstoff oder Verstärkungsstoff oder eine Mischung aus zwei oder mehr unterschiedlichen Füllstoffen und/oder Verstärkungsstoffen beispielsweise auf Basis von Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Kohlenstofffasern und/oder Glasfasern. Bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat eingesetzt. Insbesondere bevorzugt werden erfindungsgemäß mineralische teilchenformige Füllstoffe auf der Basis von Talk und/oder Wollastonit und/oder Kaolin. Am meisten bevorzugt werden mineralische teilchenförmige Füllstoffe auf der Basis von Talk.

Insbesondere für Anwendungen, in denen Isotropie bei der Dimensionsstabilität und eine hohe thermische Dimensionsstabilität gefordert wird, wie beispielsweise in Kfz-Anwendungen für Karosserieaußenteile, werden bevorzugt mineralische Füllstoffe eingesetzt, besonders bevorzugt Talk oder Wollastonit oder Kaolin, am meisten bevorzugt Talk.

Besonders bevorzugt sind auch nadelförmige mineralische Füllstoffe. Unter nadelförmigen mineralischen Füllstoffen wird erfindungsgemäß ein mineralischer Füllstoff mit stark ausgeprägtem nadelförmigen Charakter verstanden. Als Beispiel seien nadelförmigere Wollastonite genannt. Bevorzugt weist das Mineral ein Länge Durchmesser - Verhältnis von 2:1 bis 35:1, besonders bevorzugt von 3:1 bis 19:1, am meisten bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, am meisten bevorzugt bei kleiner 5 µm, bestimmt mit einem CILAS GRANULOMETER

Am meisten bevorzugt als Komponente E) werden mineralische Füllstoffe auf der Basis von Talk. Als mineralische Füllstoffe auf Basis von Talk im Sinne der Erfindung kommen alle teilchenförmigen Füllstoffe infrage, die der Fachmann mit Talk bzw. Talkum verbindet. Ebenfalls kommen alle teilchenförmigen Füllstoffe, die kommerziell angeboten werden und deren Produktbeschreibungen als charakterisierende Merkmale die Begriffe Talk bzw. Talkum enthalten, infrage.

Bevorzugt sind mineralische Füllstoffe, die einen Gehalt an Talk nach DIN 55920 von größer 50 Gew.-%, bevorzugt größer 80 Gew.-%, besonders bevorzugt größer 95 Gew.-% und insbesondere bevorzugt größer 98 Gew.-% bezogen auf die Gesamtmasse an Füllstoff aufweisen.

Die mineralischen Füllstoffe auf Basis von Talk können auch oberflächenbehandelt sein. Sie können beispielsweise mit einem Haftvermittlersystem z.B. auf Silanbasis ausgerüstet sein.

Die erfindungsgemäßen mineralischen Füllstoffe auf Basis von Talk haben bevorzugt eine obere Teilchen- bzw. Korngröße d₉₇ kleiner 50 µm, bevorzugt kleiner 25, besonders bevorzugt kleiner 10 und insbesondere bevorzugt kleiner 6 µm. Als mittlere Korngröße d₅₀ wird bevorzugt ein Wert kleiner 10, bevorzugt kleiner 6, besonders bevorzugt kleiner 2 und insbesondere bevorzugt kleiner 1 µm gewählt. Die d₉₇- und d₅₀-Werte von den Füllstoffen D werden nach Sedimentationsanalyse SEDIGRAPH D 5 000 bzw. nach Siebanalyse DIN 66 165 bestimmt.

Das mittlere Aspektverhältnis (Durchmesser zu Dicke) der teilchenförmigen Füllstoffe auf Basis von Talk liegt bevorzugt im Bereich 1 bis 100, besonders bevorzugt 2 bis 25 und insbesondere bevorzugt 5 bis 25, bestimmt an elektronenmikroskopischen Aufnahmen von Ultradünnschnitten der fertigen Produkte und Ausmessen einer repräsentativen Menge (ca. 50) von Füllstoffpartikeln.

Der Füllstoff und/oder Verstärkungsstoff kann gegebenenfalls oberflächenmodifiziert sein, beispielsweise mit einem Haftvermittler bzw. Haftvermittlersystem z.B. auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Gebräuchliche Silanverbindungen zur Vorbehandlung haben beispielsweise die allgemeine Formel

(X-(CH₂)_{q})ₖ-Si-(O-CᵣH₂ᵣ₊₁)₄₋ₖ

in der die Substituenten folgende Bedeutung haben:
- x: NH₂-, HO-, 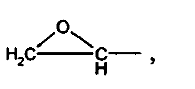
- q: eine ganze Zahl von 2 bis 10, bevorzugt 3 bis 4
- r: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimethoxysilan, Aminopropyltriethoxysilan, Aminobutyltriethoxysilan sowie die eintsprechenden Silane, welche als Substituent X eine Glycidylgruppe enthalten.

Die Silanverbindungen werden im allgemeinen in Mengen von 0,05 bis, vorzugsweise 0,5 bis 1,5 und insbesondere 0,8 bis 1 Gew.-% bezogen auf den mineralischen Füllstoff zur Oberflächenbeschichtung eingesetzt.

Die Füllstoffe können bedingt durch die Verarbeitung zur Formmasse bzw. Formkörper in der Formmasse bzw. im Formkörper einen kleineren d₉₇- bzw. d₅₀-Wert aufweisen als die ursprünglich eingesetzten Füllstoffe.

Die Teilchendurchmesser am fertigen Produkt können dabei zum Beispiel dadurch bestimmt werden, dass elektronenmikroskopische Aufnahmen von Dünnschnitten der Polymermischung aufgenommen und mindestens 25, bevorzugt mindestens 50 Füllstoffteilchen für die Auswertung herangezogen werden.

Die erfindungsgemäßen Zusammensetzungen können weiterhin übliche Zusatzstoffe enthalten, die im allgemeinen bis 15, vorzugsweise in einer Menge von 0,01 bis 10, besonders bevorzugt 0,05 bis 5, insbesondere bevorzugt 0,1 bis 3 Gew.-%, bezogen auf das Gesamtgewicht der Formmassen, zugesetzt werden können.

Die erfindungsgemäßen können neben den Komponenten A) bis E) außerdem üblichen Additive wie z.B. Stabilisatoren (zum Beispiel UV-Stabilisatoren, Thermostabilisatoren), Antistatika, Fließhilfsmittel, Entformungsmittel, Brandschutzadditive, Emulgatoren, Nukleierungsmittel, Weichmacher, Gleitmittel, pH-Wert erniedrigende Additive (z.B. Carboxylgruppen enthaltende Verbindungen), Additive zur Erhöhung der Leitfähigkeit, Farbstoffe, Pigmente etc. sowie Mischungen davon enthalten. Die genannten und weitere geeignete Additive sind zum Beispiel beschrieben in Gächter, Müller, Kunststoff-Additive, 3. Ausgabe, Hanser-Verlag, München, Wien, 1989. Die Additive können alleine oder in Mischung bzw. in Form von Masterbatchen eingesetzt werden. Die Additive können zugemischt und/oder auf die Oberfläche aufgebracht werden.

Als Stabilisatoren können bevorzugt sterisch gehinderte Phenole und/oder Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden. Besonders bevorzugt sind Stabilisatoren auf der Basis von Phosphit- und/oder Phosphitesterstabilisatoren und/oder Phosphonat- und/oder Phosphonatesterstabilisatoren.

Als Pigmente können z.B. Titandioxid, Ultramarinblau, Eisenoxid, Russ, Phthalocyanine, Chinacridone, Perylene, Nigrosin und Anthrachinone eingesetzt werden.

Als Nukleierungsmittel können z.B. Natriumphenylphosphinat, Aluminiumoxid, Siliziumdioxid sowie bevorzugt Talkum und die weiter vorne beschriebenen Nukleierungsmittel eingesetzt werden.

Als Gleit- und Entformungsmittel können bevorzugt zum Beispiel Esterwachse, Penteritrytstearat (PETS), langkettige Fettsäuren (z.B. Stearinsäure oder Behensäure), deren Salze (z.B. Ca- oder Zn-Stearat) sowie Amidderivate (z.B. Ethylen-bisstearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden.

Als Weichmacher können bevorzugt Phthalsäuredioctylester, Phthalsäuredibenzylester, Phthalsäurebutylbenzylester, Kohlenwasserstofföle, N-(n-Butyl)benzolsulfonamid eingesetzt werden.

Um leitfähige Formmassen zu erhalten, können bevorzugt zum Beispiel Russe, Leitfähigkeitsrusse, Carbonfibrillen, nanoskalige Graphitfasern (Nanotubes), Graphit, leitfähige Polymere, Metallfasern sowie andere übliche Additive zur Erhöhung der Leitfähigkeit zugesetzt werden.

Als Flammschutzmittel können zum Beispiel handelsübliche organische Halogenverbindungen mit Synergisten oder handelsübliche organische Stickstoffverbindungen oder organisch/anorganische Phosphorverbindungen einzeln oder im Gemisch eingesetzt werden. Auch mineralische Flammschutzadditive wie Magnesiumhydroxid oder Ca-Mg-Carbonat-Hydrate (z.B. DE-OS 4 236 122) können eingesetzt werden. Als halogenhaltige, insbesondere bromierte und chlorierte Verbindungen seien beispielhaft genannt: Ethylen-1,2-bistetrabromphthalimid, epoxidiertes Tetrabrombisphenol A-Harz, Tetrabrombisphenol-A-oligocarbonat, Tetrachlorbisphenol-A-oligocarbonat, Pentabrompolyacrylat, bromiertes Polystyrol. Als organische Phosphorverbindungen sind die Phosphorverbindungen gemäß WO98/17720 (PCT/EP/05705) geeignet, z.B. Triphenylphosphat (TPP), Resorcinol-bis-(diphenylphosphat) einschließlich Oligomere sowie Bisphenol-A-bis-diphenylphosphat einschließlich Oligomere (vgl. z.B. EP-A 363 608 und EP-A 640 655), Melaminphosphat, Melaminpyrophosphat, Melaminpolyphosphat und deren Mischungen. Als Stickstoffverbindungen kommen insbesondere Melamin und Melamincyanurat infrage. Als Synergisten sind z.B. Antimonverbindungen, insbesondere Antimontrioxid und Antimonpentoxid, Zinkverbindungen, Zinnverbindungen wie z.B. Zinnstannat und Borate geeignet. Kohlenstoffbildner und Tetrafluorethylenpolymerisate können zugesetzt werden. Die Flammschutzmittel, gegebenenfalls mit einem Synergisten, wie Antimonverbindungen, und Antidripping-Mittel werden im allgemeinen bis zu einer Menge von 30, vorzugsweise 20 Gew.-% (bezogen auf die Gesamtzusammensetzung) eingesetzt.

Gegenstand der Erfindung sind weiterhin ein Verfahren zur Herstellung der Zusammensetzungen, die Verwendung der erfindungsgemäßen Zusammensetzung zur Herstellung von Formkörpern, Formmassen, Halbzeugen und Formteilen sowie daraus hergestellte Formkörpern, Formmassen, Halbzeuge und Formteile.

Die Herstellung der erfindungsgemäßen Zusammensetzungen erfolgt nach an sich bekannten Verfahren durch Mischen der Komponenten. Es kann vorteilhaft sein, einzelne Komponenten vorzumischen. Vorzugsweise geschieht das Mischen der Komponenten A bis E sowie weiterer Bestandteile bei Temperaturen von 220 bis 330°C durch gemeinsames Kneten, Extrudieren oder Verwalzen der Komponenten.

Die erfindungsgemäßen Zusammensetzungen können nach üblichen Verfahren zu Halbzeugen oder Formteilen aller Art verarbeitet werden. Als Beispiele für Verarbeitungsverfahren seien Extrusionsverfahren und Spritzgussverfahren genannt. Als Beispiele für Halbzeuge seien genannt Folien und Platten.

Die Formteile können klein- oder großteilig sein und für Außen- oder Innenanwendungen eingesetzt werden. Bevorzugt werden großteilige Formteile für den Fahrzeugbau, insbesondere den Automobilsektor hergestellt. Insbesondere können aus den erfindungsgemäßen Formmassen Karosserieaußenteile wie z.B. Kotflügel, Heckklappen, Motorhauben, Stoßstangen, Ladeflächen, Abdeckungen für Ladeflächen, Autodächer oder andere Karosserieanbauteile gefertigt werden.

Formteile bzw. Halbzeuge aus den erfindungsgemäßen Fornunassen/Zusammensetzungen können sich auch im Verbund mit weiteren Werkstoffen wie z.B. Metall oder Kunststoff befinden. Nach einer eventuellen Lackierung von z.B. Karosserieaußenteilen können sich Lackschichten direkt auf den erfindungsgemäßen Formmassen und/oder auf den im Verbund eingesetzten Werkstoffen befinden. Die erfindungsgemäßen Formmassen bzw. die Formteile/Halbzeuge aus den erfindungsgemäßen Formmassen können durch übliche Techniken des Verbinden und Zusammenfügen mehrerer Komponenten oder Teile wie z.B. Coextrusion, Folienhinterspritzen, Umspritzen von Einlegeteilen, Kleben, Verschweißen, Verschrauben oder Klammern im Verbund mit anderen Werkstoffen oder sich selbst für die Herstellung von Fertigteilen wie z.B. Karosserieaußenteilen eingesetzt werden.

Bevorzugt werden die aus den erfindungsgemäßen Zusammensetzungen hergestellten Formmassen, Formteile und/oder Halbzeuge für Anwendungen als Karosserieaußenteile eingesetzt, bei denen sie einen oder mehrere Lackierungsschritte durchlaufen oder mit durchlaufen. Besonders bevorzugt sind Anwendungen als Karosserieaußenteile, bei denen die erfindungsgemäßen Formmassen, Formteile und/oder Halbzeuge einen oder mehrere Lackierungsschritte durchlaufen oder mit durchlaufen, wobei die Lackierung und/oder die Nachbehandlung einen Schritt mit einer Temperaturbelastung von 120 bis 220°C, bevorzugt von 130 bis 200°C, besonders bevorzugt von 140 bis 185°C, am meisten bevorzugt von 150 bis 170°C umfasst, wobei die Temperaturbelastung über einen Zeitraum von mehr als 5, bevorzugt mehr als 10, besonders bevorzugt mehr als 15, am meisten bevorzugt mehr als 24 Minuten einwirkt. Diese Temperaturbelastung kann beispielsweise bei der Aushärtung und/oder Trocknung der Kathodentauchlackierung, bevorzugt bei der Aushärtung und/oder Trocknung eines Fillers und/oder Primers auftreten.

Die aus den erfindungsgemäßen Zusammensetzungen enthaltenen Formmassen, Formteile und/oder Halbzeuge können aber auch überall dort eingesetzt werden, wo eine erhöhte Wärmeformbeständigkeit erforderlich ist, beispielsweise bei der thermischen Aushärtung von Klebstoffen, Füllstoffen und/oder beim Nachtempern von Formmassen und/oder Verbundsteilen.

Die erfindungsgemäßen Formmassen können auch für zahlreiche weitere Anwendungen verwendet werden. Beispielsweise seien genannt die Verwendung in der Elektrotechnik, im Bausektor oder in der Datenspeicherung. In den genannten Einsatzgebieten können Formteile aus den erfindungsgemäßen Formmassen zum Beispiel als Lampenabdeckungen, als Spulenkörper, als Sicherheitsscheiben, als Gehäusematerial für elektronische Geräte, als Gehäusematerial für Haushaltsgeräte, als Platten zur Herstellung von Abdeckungen verwendet werden.

Die erfindungsgemäßen Zusammensetzungen zeichnen sich durch eine ausgezeichnete Vicat B-Wärmeformbeständigkeit und Wärmeformstabilität aus. Die Wärmeformbeständigkeit der erfindungsgemäßen Zusammensetzung, gemessen in Vicat B-Wärmeformbeständigkeit liegt im Bereich von 145°C bis 240°C, bevorzugt im Bereich von 150°C bis 220°C, besonders bevorzugt im Bereich von 156°C bis 202°C, am meisten bevorzugt im Bereich von 160°C bis 185°C. Bevorzugt zeichnen sich Zusammensetzungen ohne ein Polycarbonat der Komponente B) durch besonders hohe Vicat B-Wärmeformbeständigkeiten und Wärmeformstabilitäten aus.

Die erfindungsgemäßen Zusammensetzungen zeichnen sich ferner durch eine ausgezeichnete Dimensionsstabilität und geringe thermische Längenausdehnung aus.

Bevorzugt weisen Zusammensetzungen, die mindestens ein Polycarbonat der Komponente C) und mindestens ein Polycarbonat der Komponente B enthalten, hohe Vicat B-Wärmeformbeständigkeiten und außerdem gleichzeitig durch sehr hohe Zähigkeiten und Schlagzähigkeiten und einen unerwartet niedrigen Abfall der Schlagzähigkeit bei tiefen Temperaturen auf, so dass sie besonders für Anwendungen mit erhöhten Anforderungen an Wärmeformbeständigkeit in Kombination mit hoher Zähigkeit geeignet sind, wie beispielsweise für Karosserieaußenteile, die beispielsweise mit dem inline-Lackierverfahren lackiert werden. Insbesondere wurde auch gefunden, daß Zusammensetzung mit mindestens einem MBS-Kautschuke als Komponente D) hohe Vicat B-Wärmeformbeständigkeiten und besonders hohe Zähigkeiten und Schlagzähigkeiten und einen besonders niedrigen Abfall der Schlagzähigkeit bei tiefen Temperaturen aufweisen, so daß sie besonders für beschriebenen Anwendungen geeignet sind.

Darüber hinaus erfüllen die erfindungsgemäßen Zusammensetzungen die Anforderungen hinsichtlich Verarbeitungsstabilität, Zähigkeit, Tieftemperaturzähigkeit, Steifigkeit, thermische Ausdehnung, Oberflächenqualität, Schmelzefließfähigkeit, Lackierbarkeit, Chemikalienbeständigkeit und Kraftstoffbeständigkeit.

### Beispiele

### Komponente A

Polyethylenterephthalat Typ A1: Es handelt sich um Polyethylenterephthalat mit einer intrinsischen Viskosität IV von 0,74 cm³/g und einer isothermen Kristallisationszeit bei 215°C von ca. 4,2 Minuten.

Polyethylenterephthalat Typ A2: Es handelt sich um Polyethylenterephthalat mit einer intrinsischen Viskosität IV von 0,78 cm³/g und einer isothermen Kristallisationszeit bei 215°C von ca. 23,7 Minuten.

Polyethylenterephthalat Typ A3: Es handelt sich um Polyethylenterephthalat mit einer intrinsischen Viskosität IV von 0,64 cm³/g und einer isothermen Kristallisationszeit bei 215°C von ca. 7,2 Minuten.

Die intrinsische Viskosität wird gemessen in Phenol/o-Dichlorbenzol (1:1 Gew.-Teile) bei 25°C.

Die Bestimmung der isothermen Kristallisationszeit von PET mit der DSC-Methode (differential scanning calometry) erfolgt mit einem PERKIN ELMER DSC 7 Differential Scanning Calometer (Einwaage ca. 10 mg, gelochtes Al-Pfännchen) mit folgendem Temperaturprogramm:
1. Aufheizen von 30°C bis 290°C mit 40°C/min,
2. 5 min. isotherm bei 290°C,
3. Kühlen von 290°C auf 215°C mit 160°C/min,
4. 30 min isotherm bei 215°C (Kristallisationstemperatur).
Die Auswertungssoftware ist PE Thermal Analysis 4.00.

### Komponente B

Lineares Polycarbonat (Makrolon 2805 von Bayer AG, Leverkusen, Deutschland) auf Basis Bisphenol A mit einer Viskosität ηrel. von 1,29 (Messbedingungen: 5 g Polycarbonat pro Liter Methylenchlorid, 25°C) und einem Molekulargewicht M_{w} von 29 000 g/mol (bestimmt mit GPC-Methoden gegen Polycarbonatstandard).

### Komponente C

Lineares Polycarbonat (Apec HT KU1-9371 von Bayer AG, Leverkusen, Deutschland) auf Basis Bisphenol A und 1,1-Bis-(4-hydroxyphenyl)-3,3,5-trimethylcyclohexan als Monomeren mit einer Vicat B-Wärmeformbeständigkeit von 203°C bis 206°C mit einer Viskosität ηrel. von 1,28 (Messbedingungen: 5 g Apec HT KU1-9371 pro Liter Methylenchlorid, 25°C) und einem Molekulargewicht Mw von 33 000 g/mol (bestimmt mit GPC-Methoden gegen Polycarbonatstandard).

### Komponente D

Bei dem verwendeten Acrylat-Pfropfpolymerisat handelt es sich bei Komponente D1 um Paraloid EXL 2300 von Rohm und Haas Deutschland GmbH, Frankfurt.

Bei den verwendeten MBS-Pfropfpolymerisat (Methylmethacylat-Butadien-Styrol) handelt es sich bei Komponente D2 um Paraloid EXL 2650 von Rohm und Haas Deutschland GmbH, Frankfurt.

Bei den verwendeten Blockcopolymeren handelt es sich bei Komponente D3 um Kraton G 1651 (SEBS) und bei Komponente D4 um Kraton G 1702 (SEP) von Shell Chemical.

Bei den verwendeten AES-Polymerisaten handelt es sich bei Komponente D5 um Blendex WX270 von GE/Ube Cycon.

### Komponente E

- E1:: Es handelt sich um Talkum der Incemin AG (Schweiz) mit einem d₅₀-Wert von 0,9 µm und einem d₉₇-Wert von kleiner 5 µm.
- E2:: Es handelt sich um ein oberflächenbehandelter Wollastonit der Nyco Minerals, Inc. mit einem Durchmesser:Längenverhältnis von 11:1 1 und einer mittleren Partikelgröße von 4 µm, d₁₀ von 1,0 µm und d₉₀ von 20 µm.
- E3:: Es handelt sich um ein oberflächenbehandelter Wollastonit der Nyco Minerals, Inc. mit einem Durchmesser:Längenverhältnis von 19:1 und einer mittleren Partikelgröße von 8 µm, d₁₀ von 2,2 µm und d₉₀ von 50 µm.
- E4:: Es handelt sich um ein oberflächenbehandelter Wollastonit der Nyco Minerals, Inc. mit einem Durchmesser:Längenverhältnis von 13:1 und einer mittleren Partikelgröße von 12 µm, d₁₀ von 3,0 µm und d₉₀ von 75 µm.
- E5:: Es handelt sich um ein oberflächenbehandelter Wollastonit der Nyco Minerals, Inc. mit einem Durchmesser:Längenverhältnis von 5:1 und einer mittleren Partikelgröße von 3 µm, d₁₀ von 0,65 µm und d₉₀ von 8 µm.
- E6:: Es handelt sich um ein unbeschichtetes Wollastonit der Nyco Minerals, Inc. mit einem Durchmesser:Längenverhältnis von 5:1 und einer mittleren Partikelgröße von 3 µm, d₁₀ von 0,65 µm und d₉₀ von 8 µm.

Die d₅₀- und d₉₇-Werte des eingesetzten Talk-Minerals E1 wurden aus Komgrößenverteilungsmessungen nach Sedigraph 5000 D bzw. Siebanalyse DIN 66 165 bestimmt.

Die mittlere Partikelgröße, der d₁₀ und d₉₀-Werte der eingesetzten Wollastonit-Mineralien E2-E6 wurden aus Komgrößenverteilungkurven aus einem CILAS GRANULOMETER bestimmt.

Als Additive wurden übliche Stabilisatoren, wie handelsübliche Phosphit- und/oder Phosphitesterstabilisatoren und/oder Phosphonat- und/oder Phosphonatesterstabilisatoren, Nukleierungsmittel und Entformungsmittel verwendet.

Compoundierungen erfolgten auf einem Zweiwellenextruder des Typs ZSK32 (Werner und Pfleiderer) bei Massetemperaturen von 260 bis 312°C.

Die Prüfkörper wurden auf einer Spritzgießmaschine des Typs Arburg 320-210-500 bei Massetemperaturen von 260 bis 300°C und Werkzeugtemperaturen von 70 bis 90°C verspritzt.

Die Ausprüfungen der erfindungsgemäßen Formmassen erfolgte nach folgenden Methoden:
Vicat B: Wärmeformstabilität bzw. Wärmeformbeständigkeit nach DIN ISO 306/B 120 in Silikonöl.
HDT A: Wärmeformstabilität bzw. Wärmeformbeständigkeit nach DIN ISO 75-2 Methode Af.
Izod-Schlagzähigkeit: Zähigkeit nach ISO 180 Methode 1 U.
Zugmodul: Steifigkeit nach DIN / EN / ISO 527-2/1A.
Reißdehnung: Dehnbarkeit bestimmt nach DIN/EN/ISO 527-2/1A.
Thermischer Längenausdehnungskoeffizient: Bestimmt nach DIN 53 752/B im angegebenen Temperaturbereich.
MVR: Fließfähigkeit nach DIN/ISO 1133 bei 280°C und 2,16 kg.

Zusammensetzung und Eigenschaften der erfindungsgemäßen thermoplastischen Formmassen gehen aus den Tabellen 1 bis 6 hervor.

Aus den Tabellen 1 bis 6 geht hervor, dass die erfindungsgemäßen Formmassen eine ausgezeichnete Wärmeformbeständigkeit/Wärmeformstabilität (Vicat B) aufweisen und einen unerwartet niedrigen Abfall der Schlagzähigkeit bei niedrigen Temperaturen (Izod-Schlagzähigkeit) zeigen. Insbesondere die Vicat-B-Wärmeformbeständigkeit liegt erfindungsgemäß oberhalb von 140°C, bevorzugt oberhalb von 146°C, besonders bevorzugt oberhalb von 150°C, am meisten bevorzugt oberhalb von 156°C. Die Oberflächenqualität aller Ansätze war sehr gut, beurteilt nach optischer Begutachtung, das bedeutet, es handelt sich um eine glatte Oberfläche die sehr gut lackierbar ist.

Darüber hinaus erfüllen sie die an thermoplastische Formmassen für großflächige Karosserieaußenteile gestellten Anforderungen im Bezug auf Steifigkeit (Zugmodul), Dehnbarkeit (Reißdehnung), thermische Ausdehnung (linearer thermischer Ausdehnungskoeffizient), Fließfähigkeit in der Schmelze (MVR) und Lackierbarkeit (Oberflächenqualität).

**Tabelle 1**

| Beispiel | | 1 (Vergl.) | 2 (Vergl.) | 3 (Vergl.) | 4 (Vergl.) |
|---|---|---|---|---|---|
| Polycarbonat, Typ B | [%] | 48 | 36 | 24 | 16 |
| Polycarbonat, Typ C | | -- | 12 | 24 | 32 |
| Polyethylenterephthalat,Typ A1 | [%] | 37,2 | 37,2 | 37,2 | 37,2 |
| Kautschuk, Typ D1 | [%] | 12 | 12 | 12 | 12 |
| Mineral, Typ E1 | [%] | 2 | 2 | 2 | 2 |
| Additive | [%] | 0,8 | 0,8 | 0,8 | 0,8 |
| Vicat B | [°C] | 137 | 148 | 156 | 164 |
| HDT A | [°C] | 92 | 94 | 99 | 92 |
| Izod-Schlagzähigkeit 23°C | [kJ/m²] | n.g. | n.g. | 109 - n.g. | 73 |
| Izod-Schlagzähigkeit -10°C | [kJ/m²] | n.g. | n.g. | 107 - n.g. | 61 |
| Izod-Schlagzähigkeit -20°C | [kJ/m²] | n.g. | n.g. | 86 - n.g. | 80 |
| Zugmodul | [MPa] | 2400 | 2400 | 2400 | 2400 |
| Reißdehnung | [%] | 59 | 39 | 18 | 7 |
| MVR (280°C/2,16 k) | [cm³/10min] | 18 | 13 | 11 | 9 |

| | | | | | |
|---|---|---|---|---|---|
| n.g. = nicht gebrochen | | | | | |

**Tabelle 2:**

| Beispiel | | 5 (Vergl.) | 6 (vergl.) | 7 (vergl.) | 8 (vergl.) |
|---|---|---|---|---|---|
| Polycarbonat, Typ B | [%] | 50 | 37,5 | 25 | 18 |
| Polycarbonat, Typ C | | -- | 12,5 | 25 | 32 |
| Polyethylenterephthalat,Typ A | [%] | 27,2 | 27,2 | 27,2 | 27,2 |
| Kautschuk, Typ D1 | [%] | 12 | 12 | 12 | 12 |
| Mineral, Typ E1 | [%] | 10 | 10 | 10 | 10 |
| Additive | [%] | 0,8 | 0,8 | 0,8 | 0,8 |
| Vicat B | [°C] | 140 | 149 | 160 | 167 |
| HDT A | [°C] | 106 | 123 | 118 | 110 |
| Izod-Schlagzähigkeit 23°C | [kJ/m²] | n.g. | 140 - n.g. | 53 | 69 |
| Izod-Schlagzähigkeit -10°C | [kJ/m²] | 128 - n.g. | 77 - n.g. | 99 | 81 |
| Izod-Schlagzähigkeit -20°C | [kJ/m²] | 131 - n.g. | 111 | 77 | 90 |
| Zugmodul | [MPa] | 3200 | 3200 | 3200 | 3200 |
| Reißdehnung | [%] | 22 | 19 | 15 | 8 |
| MVR (280°C/2,16 k | [cm³/10min] | 11 | 7 | 6 | 4 |

| | | | | | |
|---|---|---|---|---|---|
| n.g. = nicht gebrochen | | | | | |

**Tabelle 3**

| Beispiel | | 9 (Vergl.) | 10 | 11 (Vergl.) | 12 (Vergl.) | 13 (Vergl.) | 14 (Vergl.) |
|---|---|---|---|---|---|---|---|
| Polycarbonat, Typ B | [%] | 25 | 25 | 25 | 25 | | 25 |
| Polycarbonat, Typ C | [%] | 25 | 25 | 25 | 25 | 25 | 25 |
| Polyethylenterephthalat, Typ A1 | [%] | 27.2 | 27.2 | 27.2 | 27.2 | 27.2 | |
| Polyethylenterephthalat, Typ A2 | [%] | | | | | | 27,2 |
| Kautschuk, Typ D1 | [%] | 12 | - | - | - | - | 12 |
| Kautschuk, Typ D2 | [%] | - | 12 | - | - | - | - |
| Kautschuk, Typ D3 | [%] | - | - | 12 | - | - | - |
| Kautschuk, Typ D4 | [%] | - | - | - | 12 | - | - |
| Kautsehuk,Typ D5 | [%] | - | - | - | - | 12 | - |
| Mineral, Typ E1 | [%] | 10 | 10 | 10 | 10 | 10 | 10 |
| Additiv. | [%] | 0.8 | 0.8 | 0,8 | 0,8 | 0,8 | 0,8 |
| Vicat B | [°C] | 161 | 159 | 159 | 156 | 154 | 161 |
| HDT A | [°C] | 120 | 114 | 119 | 119 | 114 | 118 |
| Izod-Schlagzähigkeit 23°C | [kJ/m²] | 211 - n.g. | n.g. | 212 - n.g. | 156 - n.g. | n.g. | 172 - n.g. |
| Izod-Schlagzähigkeit-10°C | [kJ/m²] | 128 - n.g. | 158 - n.g. | 186 - n.g. | 94 - n.g. | 114 - n.g. | 98 - n.g. |
| Izod-Schlagzähigkeit-20°C | [kJ/m²] | 122 - n.g. | 199 - n.g. | 128 - n.g. | 108 - n.g. | 115 - n.g. | 91 - n.g. |
| Zugmodul | [MPa] | 3300 | 3100 | 3000 | 3100 | 3200 | 3230 |
| Reißdehnung | [%] | 24 | 29 | 25 | 4 | 18 | 18 |
| Thermischer LÄngenausdehnungskoeffizient (l/q) -20 bis 90°C | [10^-6/K] | 57/76 | 70/81 | 57/83 | 51/79 | 59/75 | - |
| MVR(280°C/2,16kg) | [cm³/10min] | 4 | 4 | 3 | 5 | 1 | 4 |

| | | | | | | | |
|---|---|---|---|---|---|---|---|
| l/q = längs/quer n.g. = nicht gebrochen | | | | | | | |

**Tabelle 4**

| Beispiel | | 15 | 16 | 17 | 18 | 19 | 20 |
|---|---|---|---|---|---|---|---|
| Polycarbonat, Typ B | [%] | 25 | 24 | 23 | 17 | 16 | 7 |
| Polycarbonat, Typ C | | 25 | 24 | 23 | 31 | 30 | 43 |
| Polyethylenterephthalat, Typ A1 | [%] | 27,2 | 26,2 | 25,2 | 26,2 | 25,2 | 21,2 |
| Kautschuk,Typ D2 | | 12 | 15 | 18 | 15 | 18 | 18 |
| Mineral, Typ E1 | [%] | 10 | 10 | 10 | 10 | 10 | 10 |
| Additive | [%] | 0,8 | 0,8 | 0,8 | 0,8 | 0,8 | 0,8 |
| Vicat B | [°C] | 159 | 156 | 156 | 162 | 159 | 169 |
| HDT A | [°C] | 117 | 113 | 115 | 119 | 113 | 129 |
| Izod-Schlagzähigkeit 23°C zähigkeit 23°C | [kJ/m²] | 172-n.g. | n.g. | n.g. | 166 - n.g. | 149 - n.g. | 173 - n.g. |
| Izod-Schlagzähigkeit-10°C zähigkeit-10°C | [kJ/m²] | 157 | 171 - n.g. | n.g. | 141 - n.g. | 127 - n.g. | 67 - n.g. |
| Izod-Schlagzähigkeit-20°C zähigkeit-20°C | [kJ/m²] | 129 - n.g. | 178 - n.g. | 170 - n.g. | 133 - n.g. | 116 - n.g. | 58 - n.g. |
| Zugmodul | [MPa] | 3190 | 3010 | 2880 | 3030 | 2830 | 2820 |
| Reißdehnung | [%] | 31 | 30 | 34 | 26 | 27 | 23 |
| Thermischer Längenausdehnungskoeffizient (1/q) -20 bis 90°C | [10^-6/K] | 63/83 | 63/84 | 69/90 | 64/86 | 67/95 | - |
| MVR (280°C/2,16 kg) | [cm³/10 min] | 3 | 3 | 2 | 2 | 2 | 1 |

| | | | | | | | |
|---|---|---|---|---|---|---|---|
| l/q = längs/quer n.g. = nicht gebrochen | | | | | | | |

**Tabelle 5**

| Beispiel | | 21 | 22 | 23 | 24 | 25 |
|---|---|---|---|---|---|---|
| Polycarbonat, Typ B | [%] | 25 | 25 | 25 | 25 | 25 |
| Polycarbonat, Typ C | [%] | 25 | 25 | 25 | 25 | 25 |
| Polyethylenterephthalat, Typ A1 | [%] | 27,2 | 27,2 | 27,2 | 27,2 | 27,2 |
| Kautschuk,Typ D2 | [%] | 12 | 12 | 12 | 12 | 12 |
| Mineral, Typ E2 | [%] | 10 | - | - | - | - |
| Mineral, Typ E3 | [%] | - | 10 | | - | - |
| Mineral, Typ E4 | [%] | - | - | 10 | | - |
| Mineral, Typ E5 | [%] | - | - | - | 10 | - |
| Mineral, Typ E6 | [%] | - | - | - | - | 10 |
| Additive | [%] | 0,8 | 0,8 | 0,8 | 0,8 | 0,8 |
| Vicat B | [°C] | 152 | 153 | 154 | 153 | 155 |
| HDT A | [°C] | 106 | 110 | 110 | 105 | 104 |
| Izod-Schlagzähigkeit 23°C | [kJ/m²] | 91 | 137 | 85 | 209 | n.g. |
| Izod-Schlagzähigkeit -10°C | [kJ/m²] | 73 | 116 | 81 | 146 | n.g. |
| Izod-Schlagzähigkeit -20°C | [kJ/m²] | 63 | 97 | 79 | 132. | n.g. |
| Zugmodul | [MPa] | 3390 | 3410 | 3250 | 3750 | 2700 |
| Reißdehnung | [%] | 18 | 18 | 18 | 27 | 21 |
| Thermischer Längenausdehnungskoeffizient (l/q) von -20 bis 90°C | [10^-6/K] | 56/91 | 57/95 | 51/85 | 72/88 | 68/83 |
| MVR (280°C/2,16 kg) | [cm³/10min] | 4 | 5 | 6 | 5 | 5 |

| | | | | | | |
|---|---|---|---|---|---|---|
| l/q = längs/quer n.g. = nicht gebrochen | | | | | | |

**Tabelle 6**

| Beispiel | | 26 (Vergl.) | 27 (Vergl.) |
|---|---|---|---|
| Polycarbonat, Typ B | [%] | 50 | - |
| Polycarbonat, Typ C | [%] | - | 50 |
| Polyethylenterephthalat, Typ A3 | [%] | 27,1 | 27,1 |
| Kautschuk,Typ D1 | [%] | 12 | 12 |
| Mineral, Typ E1 | [%] | 10 | 10 |
| Additive | [%] | 0,9 | 0,9 |
| Vicat B | [°C] | 139 | 181 |
| HDT A | [°C] | 108 | 110 |
| Izod-Schlagzähigkeit 23°C | [kJ/m²] | n.g. | 62 |
| Zugmodul | [MPa] | 3100 | 3160 |
| Reißdehnung | [%] | 30 | 4,5 |
| Thermischer Längenausdehnungskoeffizient (l/q) -20 bis 90°C | [10^-6 / K] | 80/68 | 58/79 |
| MVR (280°C/2,16 kg) | [cm³/10min] | 16 | 5 |

| | | | |
|---|---|---|---|
| l/q = längs/quer n.g. = nicht gebrochen | | | |

## Patentansprüche

1. Zusammensetzung enthaltend
A) 4 bis 80 Gew.-Teile, mindestens eines Polyethylenterephthalates,
B) 0 bis 50 Gew.-Teile mindestens eines aromatischen Polycarbonats, das nicht auf Dihydroxydiarylcycloalkanen basiert,
C) 10 bis 90 Gew.-Teile mindestens eines von Komponente B) verschiedenen Polycarbonats, dessen Basis mindestens ein Dihydroxydiarylcycloalkanderivat umfasst,
D) 1,5 bis 35 Gew.-Teile mindestens eines Pfropfpolymerisats auf Basis eines MBS-(Methylmethacrylat-Butadien-Styrol)-Kautschuks,
E) 1,5 bis 54 Gew.-Teile mindestens eines Füllstoffes und/oder Verstärkungsstoffes.

2. Zusammensetzungen gemäß Anspruch 1, wobei 3 bis 50 Gew.-Teile mindestens eines Polycarbonats B) enthalten sind.

3. Zusammensetzung gemäß obigen Ansprüchen, wobei die Basis des Polycarbonats C) mindesten ein Dihydroxydiphenylcyclohexanderivat umfasst.

4. Zusammensetzung gemäß obigen Ansprüchen, wobei die Basis des Polycarbonats C) mindestens ein 1,1-Bis-(4-hydroxyphenyl)-3,3,5-trimethylcyclohexan umfasst.

5. Zusammensetzung gemäß obigen Ansprüchen, wobei das Polycarbonat C) **dadurch gekennzeichnet ist, dass** es ein Copolycarbonat auf Basis von 1,1-Bis-(4-hydroxyphenyl)-3,3,5-trimethylcyclohexan und Bisphenol A ist.

6. Zusammensetzungen gemäß einem oder mehreren der vorangegangenen Ansprüche, wobei die Zusammensetzung ein Polycarbonat B) auf Basis Bisphenol A und ein Copolycarbonat C) auf Basis von 1,1-Bis-(4-hydroxyphenyl)-3,3,5-trimethylcyclohexan und Bisphenol A enthält.

7. Zusammensetzungen gemäß einem oder mehreren der vorangegangenen Ansprüche, wobei als Füllstoff E) ein mineralischer teilchenförmiger Füllstoff eingesetzt wird.

8. Zusammensetzungen gemäß einem oder mehreren der vorangegangenen Ansprüche, wobei es sich bei mindestens einem Füllstoff E) um einen mineralischen Füllstoff auf Basis von Talk handelt.

9. Zusammensetzung nach einem oder mehreren der vorhergehenden Ansprüche enthaltend 3 bis 25 Gew.-Teile kautschukelsastisches Pfropfcopolymerisat als Komponente D.

10. Zusammensetzungen gemäß einem oder mehreren der vorhergehenden Ansprüche, **gekennzeichnet dadurch, dass** die Vicat-B-Wärmeformbeständigkeit der Zusammensetzung oberhalb von 145°C und unterhalb von 220°C liegt.

11. Verwendung der Zusammensetzung gemäß einem oder mehreren der vorangegangenen Ansprüche zur Herstellung von Formmassen, Formkörpern, Formteilen und Halbzeugen.

12. Formmassen, Formkörper, Formteile und Halbzeuge enthaltend ein Zusammensetzung gemäß einem oder mehreren der Ansprüche 1 bis 10.

13. Verwendung der Formmassen, Formkörper, Formteile bzw. Halbzeuge gemäß Anspruch 12 als karosserieaußenteile.

14. Karosserieaußenteile enthaltend eine Zusammensetzung gemäß einem oder mehreren der Ansprüche 1 bis 10.

15. Verfahren, wobei Karosserieaußenteile gemäß Anspruch 14 einen oder mehrere Schritte eines Lackierverfahrens mit einer Temperaturbelastung im Bereich von 120 bis 220°C durchlaufen oder mit durchlaufen.

16. Lackierte Karosserieaußenteile erhältlich nach einem Verfahren gemäß Anspruch 15.

## Claims

1. Composition containing
A) from 4 to 80 parts by weight of at least one polyethylene terephthalate,
B) from 0 to 50 parts by weight of at least one aromatic polycarbonate that is not based on dihydroxydiarylcycloalkanes,
C) from 10 to 90 parts by weight of at least one polycarbonate other than component B), the basis of which polycarbonate includes at least one dihydroxydiarylcycloalkane derivative,
D) from 1.5 to 35 parts by weight of at least one graft polymer based on a MBS (methyl methacrylate-butadiene-styrene) rubber,
E) from 1.5 to 54 parts by weight of at least one filler and/or reinforcing material.

2. Compositions according to claim 1, containing from 3 to 50 parts by weight of at least one polycarbonate B).

3. Composition according to the above claims, wherein the basis of polycarbonate C) includes at least one dihydroxydiphenylcyclohexane derivative.

4. Composition according to the above claims, wherein the basis of polycarbonate C) includes at least one 1,1-bis-(4-hydroxyphenyl)-3,3,5-trimethylcyclohexane.

5. Composition according to the above claims, wherein polycarbonate C) is **characterised in that** it is a copolycarbonate based on 1,1-bis-(4-hydroxyphenyl)-3,3,5-trimethylcyclohexane and bisphenol A.

6. Compositions according to one or more of the preceding claims, wherein the composition contains a polycarbonate B) based on bisphenol A and a copolycarbonate C) based on 1,1-bis-(4-hydroxyphenyl)-3,3,5-trimethylcyclohexane and bisphenol A.

7. Compositions according to one or more of the preceding claims, wherein a particulate mineral filler is used as the filler E).

8. Compositions according to one or more of the preceding claims, wherein at least one filler E) is a mineral filler based on talc.

9. Composition according to one or more of the preceding claims, containing from 3 to 25 parts by weight of elastomeric graft copolymer as component D.

10. Compositions according to one or more of the preceding claims, **characterised in that** the Vicat B dimensional stability under heat of the composition is above 145°C and below 220°C.

11. Use of the composition according to one or more of the preceding claims in the production of moulding compositions, moulded bodies, mouldings and semi-finished products.

12. Moulding compositions, moulded bodies, mouldings and semi-finished products comprising a composition according to one or more of claims 1 to 10.

13. Use of the moulding compositions, moulded bodies, mouldings or semi-finished products according to claim 12 as exterior automotive body parts.

14. Exterior automotive body parts comprising a composition according to one or more of claims 1 to 10.

15. Process in which exterior automotive body parts according to claim 14 pass through or jointly pass through one or more steps of a lacquering process having a temperature load in the range from 120 to 220°C.

16. Lacquered exterior automotive body parts obtainable by a process according to claim 15.

## Revendications

1. Composition contenant
A) de 4 à 80 parties en poids d'au moins un polyéthylène téréphtalate,
B) de 0 à 50 parties en poids d'au moins un polycarbonate aromatique qui n'est pas à base de dihydroxydiarylcycloalcane,
C) de 10 à 90 parties en poids d'au moins un polycarbonate différent du constituant B) dont la base comprend au moins un dérivé de dihydroxydiarylcycloalcane,
D) de 1,5 à 35 parties en poids d'au moins un polymère greffé à base d'un MBS-(méthacrylate de méthyle-butadiène-styrène)-caoutchouc,
E) de 1,5 à 54 parties en poids d'au moins une charge et/ou matière de renforcement.

2. Compositions selon la revendication 1, dans lesquelles sont contenues de 3 à 50 parties en poids d'au moins un polycarbonate B).

3. Composition selon les revendications ci-dessus, dans laquelle la base du polycarbonate C) comprend au moins un dérivé de dihydroxydiphénylcyclohexane.

4. Composition selon les revendications ci-dessus, dans laquelle la base du polycarbonate C) comprend au moins un 1,1-bis-(4-hydroxyphényl)-3,3,5-triméthylcyclohexane.

5. Composition selon les revendications ci-dessus, dans laquelle le polycarbonate C) est **caractérisé en ce qu'**il est un copolycarbonate à base de 1,1-bis-(4-hydroxyphényl)-3,3,5-triméthylcyclohexane et de bisphénol A.

6. Compositions selon l'une ou plusieurs des revendications précédentes, dans lesquelles la composition contient un polycarbonate B) à base de bisphénol A et un copolycarbonate C) à base de 1,1-bis-(4-hydroxyphényl)-3,3,5-triméthylcyclohexane et de bisphénol A.

7. Compositions selon l'une ou plusieurs des revendications précédentes, dans lesquelles on utilise comme charge E) une charge minérale en forme de particules.

8. Compositions selon l'une ou plusieurs des revendications précédentes, dans lesquelles il s'agit pour la au moins une charge E) d'une charge minérale à base de stéatite.

9. Composition selon l'une ou plusieurs des revendications précédentes contenant de 3 à 25 parties en poids de copolymère greffé caoutchouteux-élastique comme constituant D).

10. Compositions selon l'une ou plusieurs des revendications précédentes, **caractérisées en ce que** la résistance au formage thermique Vicat-B de la composition est supérieure à 145°C et inférieure à 220°C.

11. Utilisation de la composition selon l'une ou plusieurs des revendications précédentes pour la préparation de masses moulées, de corps moulés, de pièces moulées et de produits semi-finis.

12. Masses moulées, corps moulés, pièces moulées et produits semi-finis contenant une composition selon l'une ou plusieurs des revendications 1 à 10.

13. Utilisation des masses moulées, des corps moulés, des pièces moulées respectivement des produits semi-finis selon la revendication 12 comme pièces extérieures de carrosserie.

14. Pièces extérieures de carrosserie contenant une composition selon l'une ou plusieurs des revendications 1 à 10.

15. Procédé, dans lequel des pièces extérieures de carrosserie selon la revendication 14 traversent ou parcourent une ou plusieurs étapes d'un procédé de laquage avec une charge de température dans le domaine de 120 à 220°C.

16. Pièces extérieures de carrosserie laquées obtenues selon un procédé selon la revendication 15.
